# EUROPEAN PATENT APPLICATION

(11) **EP 4 835 278 A2**
(43) Date of publication of application: **04.11.2026**
(21) Application number: 26176103.5
(22) Date of filing: 01.05.2026
(51) Int. Cl.: F02C 7/14

(54) **THERMAL MANAGEMENT ASSEMBLY FOR AN AIRCRAFT PROPULSION SYSTEM**

(30) Priority: 02.05.2025 US 202519197637
(71) Applicant: RTX Corporation, Farmington, CT 06032 (US)
(72) Inventor: YAZICI, Murat, Glastonbury, 06033 (US); CLARK, Thomas E., Wells, 04090 (US)
(74) Representative: Dehns

(57) **Abstract**

An assembly for an aircraft (1000) includes a gas turbine engine (22), a battery (70), an engine thermal management system, TMS, (74), a battery TMS (76), and a flow regulator (108). The gas turbine engine (22) includes at least one engine oil load (86). The engine TMS (74) forms an oil flow path (88) connected in fluid communication with the at least one engine oil load (86). The battery TMS (76) forms a battery coolant flow path (110) at the battery (70). The battery TMS (76) includes a battery heat exchanger (112) forming a portion of the battery coolant flow path (110). The flow regulator (108) selectively interconnects the oil flow path (88) in fluid communication with the battery heat exchanger (112).

## Description

### BACKGROUND

### 1. Technical Field

This invention relates generally to aircraft and, more particularly, to thermal management assemblies for aircraft propulsion and electrical systems.

### 2. Background Information

Propulsion and electrical systems for aircraft include equipment requiring complex thermal management to facilitate reliable operation in view of the varying temperature extremes and operating conditions experienced by aircraft systems. Various thermal management assemblies are known in the art. While these known thermal management assemblies may be useful for their intended purposes, there is room in the art for improvement.

### SUMMARY

According to an aspect of the present invention, an assembly for an aircraft includes a gas turbine engine, a battery, an engine thermal management system (TMS), a battery TMS, and a flow regulator. The gas turbine engine includes at least one engine oil load. The engine TMS forms an oil flow path connected in fluid communication with the at least one engine oil load. The battery TMS forms a battery coolant flow path at the battery. The battery TMS includes a battery heat exchanger forming a portion of the battery coolant flow path. The flow regulator selectively interconnects the oil flow path in fluid communication with the battery heat exchanger.

Optionally, and in accordance with the above, the flow regulator may be operable in a first mode and a second mode, in the first mode the flow regulator may direct oil from the oil flow path to the battery heat exchanger, and in the second mode the flow regulator may isolate oil from the oil flow path to the battery heat exchanger.

Optionally, and in accordance with any of the above, the assembly may further include a controller including a processor connected in signal communication with a non-transitory memory storing instructions which, when executed by the processor, may cause the processor to receive a temperature of the battery, compare the temperature to a threshold, and control the flow regulator to operate in the first mode or the second mode including controlling the flow regulator to operate in the first mode in response to the temperature less than the threshold and controlling the flow regulator to operate in the second mode in response to the temperature greater than the threshold.

Optionally, and in accordance with any of the above, in the first mode the flow regulator may be configured to modulate a flow rate of the oil from the oil flow path to the battery heat exchanger.

Optionally, and in accordance with any of the above, the gas turbine engine may include a rotating structure and the rotating structure may include a bladed compressor rotor and a bladed turbine rotor. The assembly may further include an electric machine coupled with the rotating structure and electrically connected with the battery.

Optionally, and in accordance with any of the above, the at least one engine oil load may include the electric machine.

Optionally, and in accordance with any of the above, the battery may include a plurality of lithium-ion battery cells or a plurality of nickel-metal hydride battery cells.

Optionally, and in accordance with any of the above, the engine TMS may further include at least one heat exchanger further forming the oil flow path.

Optionally, and in accordance with any of the above, the engine TMS may further include a pump and an oil tank further forming the oil flow path.

According to another aspect of the present invention, an assembly for an aircraft includes a gas turbine engine, an electrical system, and a thermal management assembly. The gas turbine engine includes a rotating structure and at least one engine oil load. The rotating structure includes a bladed compressor rotor and a bladed turbine rotor. The electrical system includes an electric machine and a battery. The electric machine is coupled with the rotating structure. The electric machine is electrically connected with the battery. The thermal management assembly includes an engine thermal management system (TMS), a battery TMS, and at least one heat exchanger. The engine TMS forms an oil flow path connected in fluid communication with the at least one engine oil load. The battery TMS forms a battery coolant flow path at the battery. The at least one heat exchanger is configured to transfer heat energy from an oil within the oil flow path to a coolant within the battery coolant flow path.

Optionally, and in accordance with the above, the thermal management assembly may include an intermediate coolant fluid system, the at least one heat exchanger may include an intermediate heat exchanger and a battery heat exchanger, the intermediate heat exchanger may form portions of the oil flow path and the intermediate coolant fluid system, and the battery heat exchanger may form portions of the intermediate coolant fluid system and the battery coolant flow path.

Optionally, and in accordance with any of the above, the at least one heat exchanger may include a battery heat exchanger connectable in fluid communication with the oil flow path, and the battery heat exchanger may form a portion of the battery coolant flow path.

Optionally, and in accordance with any of the above, the thermal management assembly may further include a flow regulator selectively interconnecting the oil flow path in fluid communication with the battery heat exchanger, the flow regulator may be operable in a first mode and a second mode, in the first mode the flow regulator may direct oil from the oil flow path to the battery heat exchanger, and in the second mode the flow regulator may isolate oil from the oil flow path to the battery heat exchanger.

Optionally, and in accordance with any of the above, the at least one oil load may include the rotating structure.

Optionally, and in accordance with any of the above, the at least one oil load may include the electric machine.

According to another aspect of the present invention, an assembly for an aircraft includes a gas turbine engine, a battery, an engine thermal management system (TMS), a battery TMS, a flow regulator, and a controller. The gas turbine engine includes at least one engine oil load. The engine TMS forms an oil flow path connected in fluid communication with the at least one engine oil load. The battery TMS forms a battery coolant flow path at the battery. The battery TMS includes a battery heat exchanger forming a portion of the battery coolant flow path. The flow regulator selectively interconnects the oil flow path in fluid communication with the battery heat exchanger. The flow regulator is operable in a first mode and a second mode. In the first mode the flow regulator directs oil from the oil flow path to the battery heat exchanger. In the second mode the flow regulator isolates the oil flow path from the battery heat exchanger. The controller includes a processor connected in signal communication with a non-transitory memory storing instructions which, when executed by the processor, cause the processor to control the flow regulator to operate in the first mode or the second mode to modulate a temperature of the battery.

Optionally, and in accordance with the above, the gas turbine engine may include a rotating structure, and the rotating structure may include a bladed compressor rotor and a bladed turbine rotor. The assembly further may further include an electric machine coupled with the rotating structure and electrically connected with the battery.

Optionally, and in accordance with any of the above, the at least one engine oil load may include the electric machine.

Optionally, and in accordance with any of the above, the engine TMS further may further include at least one heat exchanger further forming the oil flow path.

Optionally, and in accordance with any of the above, the engine TMS further may further include a pump and an oil tank further forming the oil flow path.

The foregoing features and elements may be combined in various combinations without exclusivity, unless expressly indicated otherwise. For example, aspects and/or embodiments of the present invention may include any one or more of the individual features or elements disclosed above and/or below alone or in any combination thereof. These features and elements as well as the operation thereof will become more apparent in light of the following description and the accompanying drawings. It should be understood; however, the following description and drawings are intended to be exemplary in nature and non-limiting.

### BRIEF DESCRIPTION OF THE DRAWINGS

FIG. 1 illustrates a perspective view of an aircraft including a propulsion system, in accordance with one or more embodiments of the present invention.
FIG. 2 schematically illustrates a cutaway, side view of a propulsion system and an electrical system for an aircraft, in accordance with one or more embodiments of the present invention.
FIG. 3 schematically illustrates an engine thermal management system of the propulsion system, in accordance with one or more embodiments of the present invention.
FIGS. 4A-C schematically illustrates heat exchangers of the engine thermal management system, in accordance with one or more embodiments of the present invention.
FIG. 5 schematically illustrates a thermal management assembly, in accordance with one or more embodiments of the present invention.
FIG. 6 schematically illustrates another thermal management assembly, in accordance with one or more embodiments of the present invention.
FIG. 7 schematically illustrates yet another thermal management assembly, in accordance with one or more embodiments of the present invention.

### DETAILED DESCRIPTION

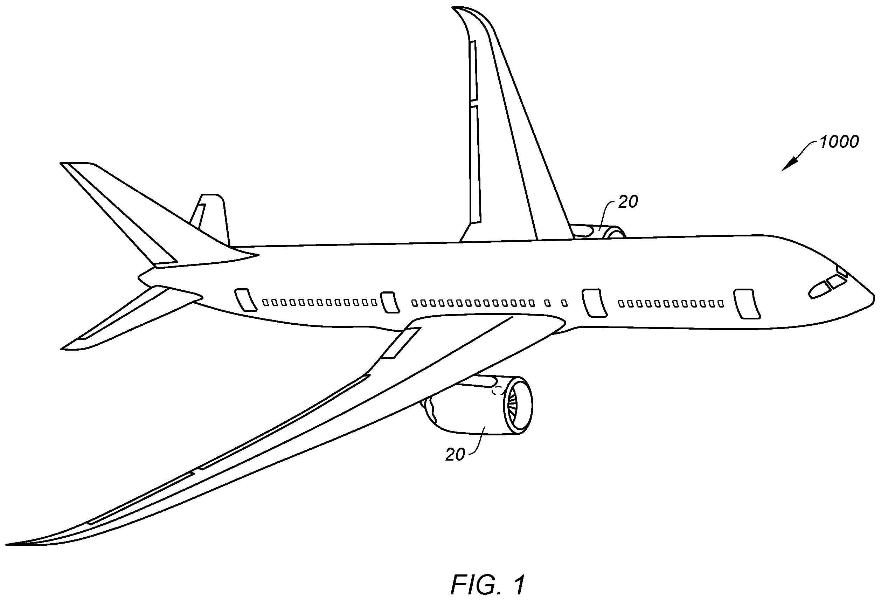

FIG. 1 illustrates an exemplary aircraft 1000 including a propulsion system 20. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV; e.g., a drone).

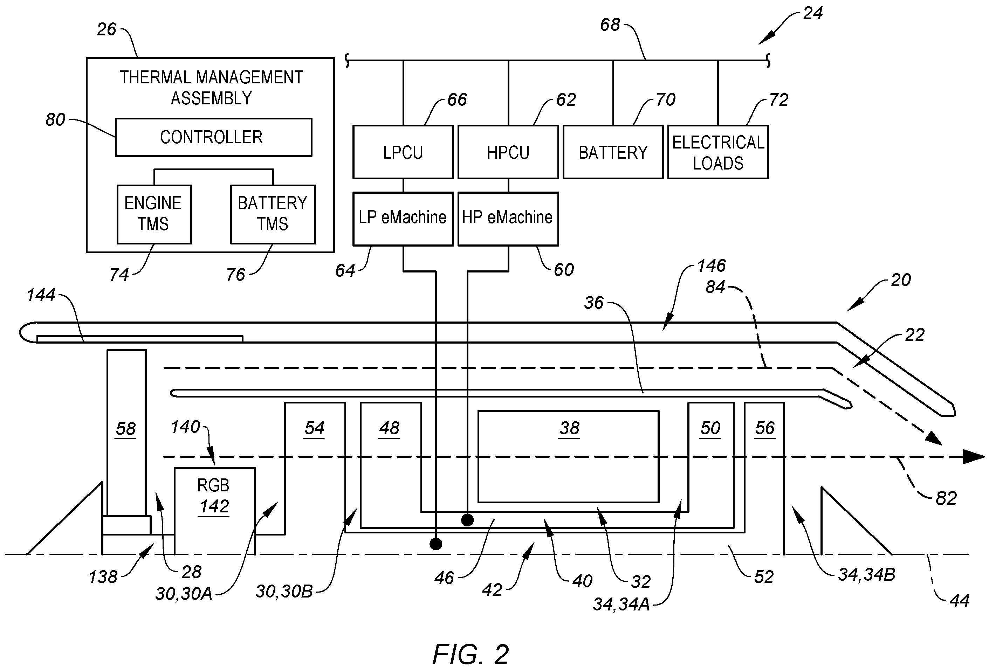

FIG. 2 schematically illustrates a cutaway, side view of the propulsion system 20. The propulsion system 20 of FIG. 2 is configured as a hybrid-electric propulsion system. The propulsion system 20 includes a gas turbine engine 22. The aircraft 1000 and its propulsion system 20 each include portions of an electrical system 24 and a thermal management assembly 26.

The gas turbine engine 22 of FIG. 2 is configured as a multi-spool turbofan gas turbine engine. However, while the following description and accompanying drawings may refer to the turbofan gas turbine engine of FIG. 2 as an example, it should be understood that aspects of the present invention may be equally applicable to other types of gas turbine engines including, but not limited to, a turboshaft gas turbine engine, a turboprop gas turbine engine, a turbojet gas turbine engine, and/or a propfan (e.g., an open rotor) gas turbine engine.

The gas turbine engine 22 of FIG. 2 includes a fan section 28, a compressor section 30, a combustor section 32, a turbine section 34, and an engine static structure 36. The compressor section 30 includes a low-pressure compressor (LPC) section 30A and a high-pressure compressor (HPC) section 30B. The combustor section 32 includes a combustor 38 (e.g., an annular combustor). The turbine section 34 includes a high-pressure turbine (HPT) section 34A and a low-pressure turbine (LPT) section 34B. The compressor section 30, the combustor section 32, and the turbine section 34 may collectively be referred to as an "engine core."

Components of the fan section 28, the compressor section 30, and the turbine section 34 form a first rotating structure 40 (e.g., a high-pressure (HP) spool) and a second rotating structure 42 (e.g., a low-pressure (LP) spool) of the gas turbine engine 22. The first rotating structure 40 and the second rotating structure 42 are mounted for rotation about a rotational axis 44 (e.g., an axial centerline) of the gas turbine engine 22 relative to the engine static structure 36.

The first rotating structure 40 includes a first shaft 46, a bladed first compressor rotor 48 for the high-pressure compressor section 30B, and a bladed first turbine rotor 50 for the high-pressure turbine section 34A. The first shaft 46 interconnects the bladed first compressor rotor 48 and the bladed first turbine rotor 50.

The second rotating structure 42 includes a second shaft 52, a bladed second compressor rotor 54 for the low-pressure compressor section 30A, and a bladed second turbine rotor 56 for the low-pressure turbine section 34B. The second shaft 52 interconnects the bladed second compressor rotor 54 and the bladed second turbine rotor 56.

The second rotating structure 42 (e.g., the second shaft 52) is operably coupled with a bladed fan rotor 58 (e.g., a propulsor rotor) of the fan section 28 by a drivetrain 138. The drivetrain 138 may be configured as a geared drivetrain, where a geartrain 140 (e.g., a transmission, a speed change device, an epicyclic geartrain, etc.) is disposed between and operatively couples the second rotating structure 42 to the bladed fan rotor 58. With this arrangement, the bladed fan rotor 58 may rotate at a different (e.g., slower) rotational speed than the second rotating structure 42. The geartrain 140 of FIG. 2 is housed, at least in part, by a gearbox 142 (e.g., a reduction gear box (RGB)). The drivetrain 138 may alternatively be configured as a direct-drive drivetrain, where the geartrain 140 is omitted and the bladed fan rotor 58 rotates at a same rotational speed as the second rotating structure 42.

The gas turbine engine 22 of FIG. 2 is described above with a particular two rotating structure arrangement. The present invention, however, is not limited to such an exemplary arrangement. For example, the bladed second compressor rotor 54 may be omitted to configure the bladed second turbine rotor 56 as a power turbine (PT) rotor for driving the bladed fan rotor 58. In another example, the gas turbine engine 22 may include another rotating structure (e.g., an intermediate spool).

The engine static structure 36 may include one or more engine cases, cowlings, bearing assemblies, and/or other non-rotating structures configured to house and/or support (e.g., rotationally support) components of the gas turbine engine 22 sections 28, 30, 32, 34.

The electrical system 24 of FIG. 2 includes a first electric machine 60 (e.g., an "HP eMachine"), a first control unit 62 ("HPCU"; e.g., a motor control unit, a generator control unit, etc.), a second electric machine 64 (e.g., an "LP eMachine"), and a second control unit 66 ("LPCU"; e.g., a motor control unit, a generator control unit, etc.). The first electric machine 60 is coupled with the first rotating structure 40 (e.g., the first shaft 46), for example, directly or indirectly through a gear train (e.g., a gear box, a bevel gear assembly, etc.). The first control unit 62 is electrically connected to the first electric machine 60. The second electric machine 64 is coupled with the second rotating structure 42 (e.g., the second shaft 52), for example, directly or indirectly through a gear train (e.g., a gear box, a bevel gear assembly, etc.). The second control unit 66 is electrically connected to the second electric machine 64. Components of the electrical system 24, including the electric machines 60, 64 and the control units 62, 66 may be disposed within the engine core or, alternatively, within the propulsion system 20 outside of the engine core. For example, the components 60, 62, 64,66 may be disposed on or within the engine static structure 36 outside of the engine core, at an annular fan case 144 of the engine static structure 36, within a nacelle 146 forming an exterior aerodynamic housing of the propulsion system 20, and/or at another suitable location within the propulsion system. The present invention, however, is not limited to any particular locations of the components 60, 62, 64, 66 within the propulsion system 20.

Each of the electric machines 60, 64 may be configurable as an electric motor and/or an electric generator (e.g., an electric motor-generator). For example, during a motor mode of operation, the electric machines 60, 64 may operate as the electric motor to convert electricity received from the respective one of the control units 62, 66. By contrast, during a generator mode of operation, the electric machines 60, 64 may operate as the electric generator to convert mechanical power received from the respective one of the rotating structures 40, 42 into electricity. The electric machines 60, 64 of the present invention, however, are not limited to such exemplary operation. For example, one or both of the electric machines 60, 64 may alternatively each be configured as a dedicated electric generator (e.g., without the electric motor functionality) or as a dedicated electric motor (e.g., without the electric generator functionality).

Each of the control units 62, 66 is configured to control operation of the respective one of the electric machines 60, 64. For example, when operating as the electric motor, the respective control unit 62, 66 is configured to regulate a flow of electricity from an aircraft electrical system to the respective electric machine 60, 64. This electricity flow regulation may include: (a) turning-on the flow of electricity from the aircraft electrical system to the respective electric machine 60, 64 (e.g., electrically coupling the respective electric machine 60, 64 to the aircraft electrical system); (b) turning-off the flow of electricity from the aircraft electrical system to the respective electric machine 60, 64 (e.g., electrically decoupling the respective electric machine 60, 64 from the aircraft electrical system); (c) moderating the flow of electricity from the aircraft electrical system to the respective electric machine 60, 64 (e.g., to control a rotation speed and/or torque of the respective electric machine 60, 64). Here, the respective control unit 62, 66 operates as a motor controller. In another example, when operating as the electric generator, the respective control unit 62, 66 is configured to regulate a flow of electricity from the respective electric machine 60, 64 to the aircraft electrical system. This electricity flow regulation may include: (a) turning-on the flow of electricity from the respective electric machine 60, 64 to the aircraft electrical system (e.g., electrically coupling the respective electric machine 60, 64 to the aircraft electrical system); (b) turning-off the flow of electricity from the respective electric machine 60, 64 to the aircraft electrical system (e.g., electrically decoupling the respective electric machine 60, 64 from the aircraft electrical system); (c) moderating the flow of electricity from the respective electric machine 60, 64 to the aircraft electrical system. Here, the respective control unit 62, 66 operates as a generator controller.

In some embodiments, the first electric machine 60 and the second electric machine 64 may be electrically connected with a single control unit configured to control operation of each of the first electric machine 60 and the second electric machine 64, similar to the operation of the first control unit 62 and the second control unit 66.

The electrical system 24 further includes an aircraft electrical distribution system 68 and a battery 70. The electrical distribution system 68 electrically interconnects components of the electrical system 24 including the control units 62, 66 and the battery 70. The electrical distribution system 68 may be electrically connected with and configured to supply electrical power to electrical loads 72 of the aircraft 1000 and/or its propulsion system 20 such as, but not limited to, environmental control systems, lighting systems, communication systems, electronic control equipment, cockpit instrumentation, avionics systems, electric actuators, and the like. The battery 70 may typically be disposed within the aircraft 1000 (see FIG. 1) outside of the propulsion system 20. The battery 70 may include a plurality of battery modules (e.g., battery packs), battery cells, and/or the like electrically connected together in series and/or parallel as necessary to configure the battery 70 with the desired electrical characteristics (e.g., voltage output, current output, storage capacity, etc.). The present invention is not limited to any particular configuration of the battery 70. The battery 70 (e.g., and its battery cells) may be configured as a rechargeable battery having a battery chemistry such as, but not limited to, lead acid, nickel cadmium (NiCd), nickel-metal hydride (Ni-MH), lithium-ion (Li-ion), lithium-polymer (Li-poly), lithium metal, and the like.

As will be discussed in further detail, the thermal management assembly 26 includes an engine thermal management system (TMS) 74. The thermal management assembly 26 further includes a battery TMS 76 for the battery 70. The thermal management assembly 26 may further include or otherwise be connected in signal communication with a controller 80.

In operation of the gas turbine engine 22 of FIG. 2, ambient air is directed through the fan section 28 and into a core flow path 82 (e.g., an annular flow path) and a bypass flow path 84 (e.g., an annular flow path) by rotation of the bladed fan rotor 58. Air flow along the core flow path 82 is compressed by the low-pressure compressor section 30A and the high-pressure compressor section 30B, mixed and burned with fuel in the combustor 38, and then directed through the high-pressure turbine section 34A and the low-pressure turbine section 34B. The bladed first turbine rotor 50 and the bladed second turbine rotor 56 rotationally drive the first rotating structure 40 and the second rotating structure 42, respectively, in response to the combustion gas flow through the high-pressure turbine section 34A and the low-pressure turbine section 34B. The first electric machine 60 and the second electric machine 64 may be selectively operated to apply rotational force to the first rotating structure 40 and/or the second rotating structure 42, respectively. The first electric machine 60 and/or the second electric machine 64 may alternatively be driven by the first rotating structure 40 and/or the second rotating structure 42, respectively, to generate electrical power for the electrical distribution system 68, for example, to supply electrical power for charging the battery 70.

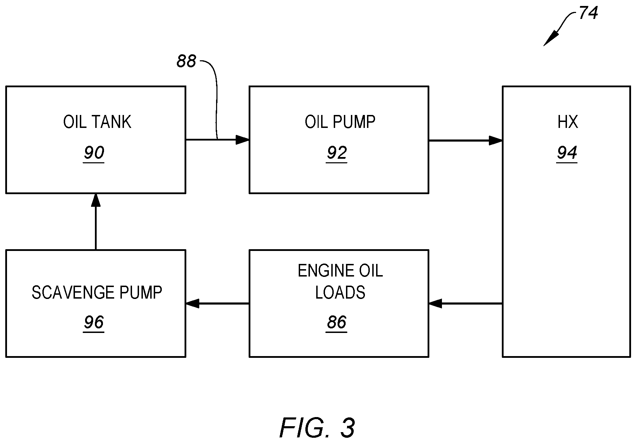

FIG. 3 schematically illustrates the engine TMS 74. The engine TMS 74 is configured to facilitate lubrication and/or thermal regulation of one or more engine loads 86 of the gas turbine engine 22. Examples of the engine oil loads 86 include, but are not limited to, bearing assemblies for the rotating structures 40, 42, drivetrain and/or geartrain components, gearboxes (e.g., an accessory gearbox), hydraulic actuators, and the like. In some embodiments, the engine TMS 74 may additionally facilitate lubrication and/or thermal regulation of the electric machines 60, 64 and/or the control units 62, 66, which electric machines 60, 64 and/or control units 62, 66 may be part of the engine oil loads 86. The engine TMS 74 forms a primary coolant fluid flow path 88. The engine TMS 74 is connected in fluid communication with the engine loads 86 and configured to circulate a coolant fluid (e.g., oil) through the engine loads 86 along the primary coolant fluid flow path 88.

The engine TMS 74 of FIG. 3 includes an oil tank 90, an oil pump 92, and one or more heat exchangers 94 forming portions of the primary coolant fluid flow path 88. The engine TMS 74 may additionally include one or more scavenge pumps 96 along the primary coolant fluid flow path 88. The oil pump 92 is configured to circulate oil from the oil tank 90 through the heat exchangers 94 and the engine oil loads 86 along the primary coolant fluid flow path 88. Oil from the engine oil loads 86 is directed to return to the oil tank 90 by the scavenge pumps 96. For example, the scavenge pumps 96 may operate to direct (e.g., pump) oil from one or more of the engine oil loads 86, or an oil sump downstream of the engine oil loads 86, to the oil tank 90. The present invention is not limited to the foregoing exemplary configuration of the engine TMS 74 illustrated in FIG. 3. Moreover, components of the engine TMS 74, including the components 90, 92, 94, 96, may be configured in a different order than as depicted in FIG. 3.

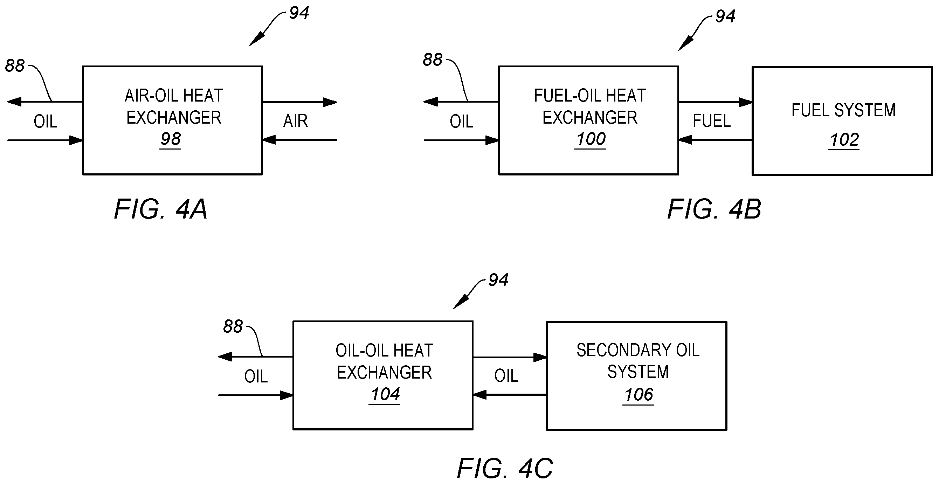

FIGS. 4A-C schematically illustrate various exemplary heat exchanger configurations of the heat exchangers 94. FIG. 4A illustrates an air-oil heat exchanger 98 forming a portion of the primary coolant fluid flow path 88. The air-oil heat exchanger 98 facilitates the transfer of heat energy from the coolant fluid of the engine TMS 74 to an air flow directed through the air-oil heat exchanger 98, for example, along the bypass flow path 84. FIG. 4B illustrates a fuel-oil heat exchanger 100 forming a portion of the primary coolant fluid flow path 88. The fuel-oil heat exchanger 100 facilitates the transfer of heat energy from the coolant fluid of the engine TMS 74 to fuel directed through the fuel-oil heat exchanger 100 from a fuel system 102 of the gas turbine engine 22. This configuration of the fuel-oil heat exchanger 100 additionally facilitates heating the fuel from the fuel system 102 prior to directing the fuel into the combustor 38 (see FIG. 2) for combustion. FIG. 4C illustrates an oil-oil heat exchanger 104 forming a portion of the primary coolant fluid flow path 88. The oil-oil heat exchanger 104 facilitates the transfer of heat energy from the coolant fluid of the engine TMS 74 to oil of a secondary oil system 106 (e.g., an electric machine thermal management system) of the gas turbine engine 22. Configurations of the heat exchangers 94 are not limited to the foregoing exemplary heat exchangers 98, 100, 104 described above. The heat exchangers 98 may include combinations of heat exchangers (e.g., the heat exchangers 98, 100, 104) sequentially arranged along and forming the primary coolant fluid flow path 88.

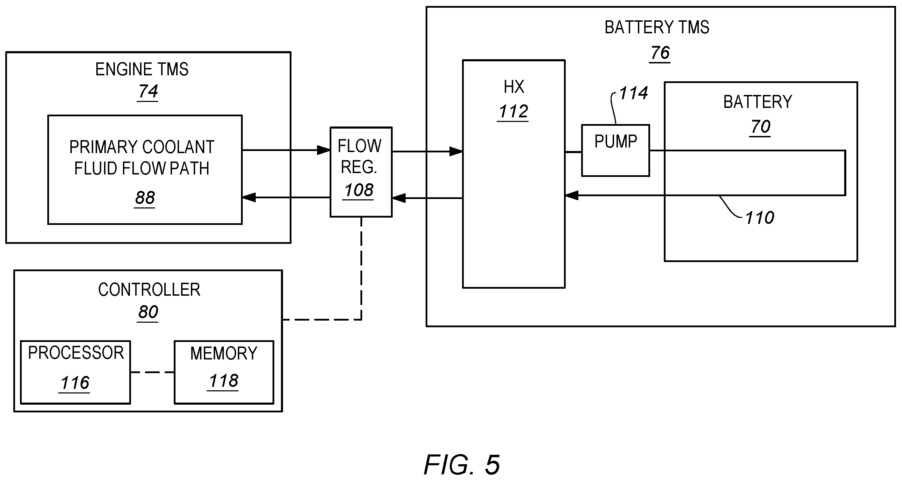

FIG. 5 schematically illustrates the engine TMS 74 connected in fluid communication with the battery TMS 76 by a flow regulator 108 of the thermal management assembly 26.

The battery TMS 76 forms a battery coolant fluid flow path 110 at the battery 70. The battery coolant fluid flow path 110 may extend along an exterior of the battery 70 and/or within the battery 70. The battery TMS 76 includes one or more battery heat exchangers 112 and a pump 114. The battery heat exchangers 112 and the pump 114 further form the battery coolant fluid flow path 110. The battery heat exchangers 112 are configured to facilitate the transfer of heat energy from the coolant fluid of the engine TMS 74 to a coolant fluid (e.g., water, refrigerants, ammonia-based coolants, ethylene glycol (EG), propylene glycol (PG), or propylene glycol with water (PGW), etc.) of the battery TMS 76. The pump 114 is configured to circulate the coolant fluid through the battery heat exchangers 112 and the battery 70 along the battery coolant fluid flow path 110.

The flow regulator 108 of FIG. 5 selectively connects the primary coolant fluid flow path 88 in fluid communication with the battery heat exchangers 112. The flow regulator 108, for example, may connect the primary coolant fluid flow path 88 in fluid communication with the battery heat exchangers 112 during a first engine mode of operation of the thermal management assembly 26 and isolate the primary coolant fluid flow path 88 from fluid communication with the battery heat exchangers 112 during a second engine mode of operation of the thermal management assembly 26. In the first engine mode of operation, the flow regulator 108 may control (e.g., modulate) a flow rate of the coolant fluid supplied from the primary coolant fluid flow path 88 to the battery heat exchangers 112. The flow regulator 108 may include one or more remotely operable control valves (e.g., solenoid valves) configured to direct, interrupt, and modulate coolant fluid flow through the flow regulator 108 between the engine TMS 74 and the battery TMS 76.

Components of the thermal management assembly 26, including components of its engine TMS 74, battery TMS 76, and flow regulator 108, may be disposed within the engine core or, alternatively, within the propulsion system 20 outside of the engine core. For example, the thermal management assembly 26 components including, but not limited to, the oil tank 90, the oil pump 92, the heat exchangers 94, the scavenge pumps 96, the flow regulator 108 and its components, the battery heat exchangers 112 and/or the pump 114 may be disposed on or within the engine static structure 36 outside of the engine core, at the fan case 144 of the engine static structure 36, within the nacelle 146, and/or at another suitable location within the propulsion system. The present invention, however, is not limited to any particular locations of the components 60, 62, 64, 66 within the propulsion system 20.

The thermal management assembly 26 may include or otherwise be connected in signal communication with the controller 80. The controller 80 may be connected in signal communication with the flow regulator 108 and configured to control the flow regulator 108 to operate in its first engine mode of operation or its second engine mode of operation. The controller 80 includes a processor 116 connected in signal communication with memory 118. The processor 116 may include any type of computing device, computational circuit, processor(s), central processing unit (CPU), graphics processing unit (GPU), computer, or the like capable of executing a series of instructions that are stored in the memory 118. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the controller 80 and its processor 116 to accomplish the same algorithmically and/or by coordination of thermal management assembly 26 components including, but not limited to, the flow regulator 108. The memory 118 may include a single memory device or a plurality of memory devices (e.g., a computer-readable storage device that can be read, written, or otherwise accessed by a general purpose or special purpose computing device, including any processing electronics and/or processing circuitry capable of executing instructions). The present invention is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly and/or indirectly coupled to the controller 80. The controller 80 may include, or may be in communication with, a user interface including one or more input devices and/or one or more output devices, for example, an input device that enables a user to enter data and/or instructions and an output device configured to display information (e.g., a visual display or a printer), or to transfer data, etc. Communications between the controller 80 and external electrical or electronic devices may be via a hardwire connection or via a wireless connection. A person of skill in the art will recognize that portions of the controller 80 may assume various forms (e.g., digital signal processor, analog device, etc.).

The controller 80 may form or otherwise be part of an engine control unit (ECU) for the propulsion system 20. The ECU may control operating parameters of the gas turbine engine 22 including, but not limited to, fuel flow, compressor bleed air, shaft 46 and/or shaft 52 torque and/or rotation speed, etc., so as to control an engine power or performance of the gas turbine engine 22. In some embodiments, the ECU may be part of a full authority digital engine control (FADEC) system for the propulsion system 20.

The controller 80 may control the flow regulator 108 to modulate a temperature of the battery 70 during operation of the engine TMS 74 and the battery TMS 76. For example, the controller 80 may measure or otherwise receive (e.g., using one or more temperature sensors) a temperature (e.g., a single measured temperature, an average of a plurality of measured temperatures, etc.) of the battery 70 and control the flow regulator 108 to operate in the first engine mode of operation or the second engine mode of operation based on the battery temperature. For example, the controller 80 may control the flow regulator 108 to operate in the first engine mode of operation when the battery temperature is less than a threshold temperature, to facilitate warming the battery 70. The controller 80 may control the flow regulator 108 to operate in the second engine mode of operation when the battery temperature is greater than the threshold temperature.

Battery cells of the battery 70 - for example, Li-ion or Ni-MH battery cells - may be warmed during electrical system 24 operation to facilitate improved performance and/or durability of the battery cells. The present invention thermal management assembly 26 facilitate heating of the battery 70 using heat energy transferred from the engine TMS 74 to the battery TMS 76. Moreover, the use of heat energy from the engine TMS 74 by the battery TMS 76 may facilitate reductions in engine TMS 74 cooling needs, for example, by the heat exchangers 94 (see FIGS. 3, 4A-4C).

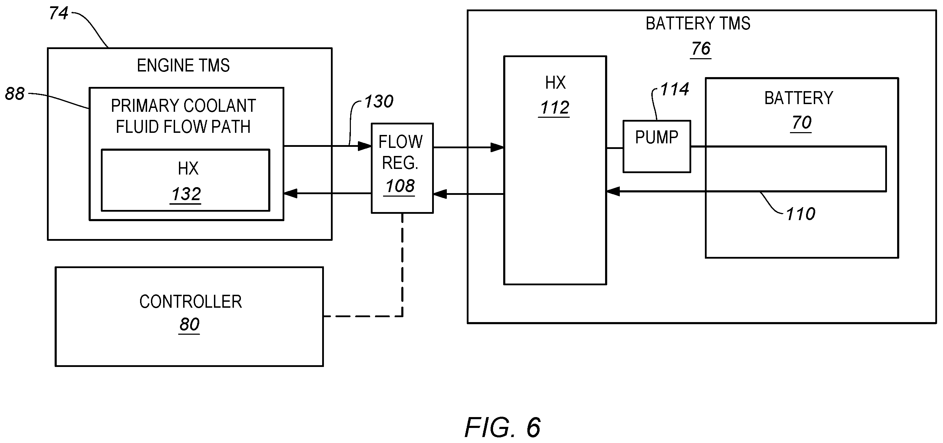

Referring to FIG. 6, in some embodiments, the thermal management assembly 26 may include an intermediate coolant fluid system 130 and an intermediate heat exchanger 132. The intermediate heat exchanger 132 may be one of the heat exchangers 94 of the engine TMS 74. For example, the intermediate heat exchanger 132 may form a portion of the primary coolant fluid flow path 88. The intermediate heat exchanger 132 additionally forms a portion of the intermediate coolant fluid system 130. The flow regulator 108 of FIG. 6 selectively interconnects the intermediate heat exchanger 132 and the battery heat exchangers 112 together within the intermediate coolant fluid system 130. The intermediate coolant fluid system 130 includes a coolant fluid (e.g., water, refrigerants, ammonia-based coolants, ethylene glycol (EG), propylene glycol (PG), or propylene glycol with water (PGW), etc.). The intermediate coolant fluid system 130 and intermediate heat exchanger 132 of FIG. 6 may avoid the need to direct oil from the engine TMS 74, through the propulsion system 20 and the aircraft, to the battery TMS 76.

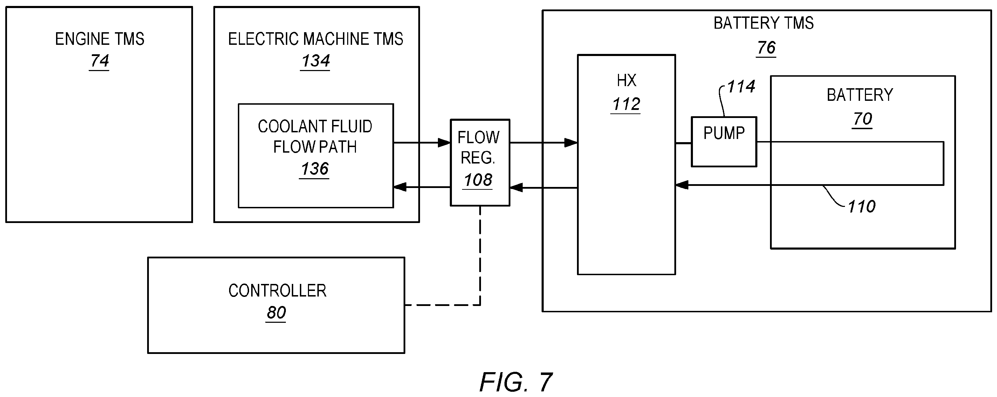

Referring to FIG. 7, in some embodiments, the thermal management assembly 26 may additionally include an electric machine TMS 134 which is discrete from the engine TMS 74. This electric machine TMS 134 is configured to facilitate lubrication and/or thermal regulation of the electric machines 60, 64, the control units 62, 66, and/or electrical cabling connected with the electric machines 60, 64 and/or the control units 62, 66 (FIG. 2). The electric machine TMS 134 forms a coolant fluid flow path 136 in fluid communication with the electric machines 60, 64, the control units 62, 66, and/or electrical cabling connected with the electric machines 60, 64 and/or the control units 62, 66. Similar to the engine TMS 74 described above, the electric machine TMS 134 may include fluid tanks, pumps, and heat exchangers, scavenge pumps, and the like forming portions of the coolant fluid flow path 136. The flow regulator 108 of FIG. 7 selectively interconnects the coolant fluid flow path 136 and the battery heat exchangers 112 together in fluid communication. The present invention is not limited to the foregoing exemplary configuration of the electric machine TMS 134 illustrated in FIG. 7.

While the principles of the invention have been described above in connection with specific apparatuses and methods, it is to be clearly understood that this description is made only by way of example and not as limitation on the scope of the invention. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this invention by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present invention is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the invention may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the invention--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An assembly for an aircraft (1000), the assembly comprising:
a gas turbine engine (22) comprising at least one engine oil load (86);
a battery (70);
an engine thermal management system, TMS, (74) forming an oil flow path (88) connected in fluid communication with the at least one engine oil load (86);
a battery TMS (76) forming a battery coolant flow path (110) at the battery (70), the battery TMS (76) comprising a battery heat exchanger (112) forming a portion of the battery coolant flow path (110); and
a flow regulator (108) selectively interconnecting the oil flow path (88) in fluid communication with the battery heat exchanger (112).

2. The assembly of claim 1, wherein the flow regulator (108) is operable in a first mode and a second mode, in the first mode the flow regulator (108) directs oil from the oil flow path (88) to the battery heat exchanger (112), and in the second mode the flow regulator (108) isolates oil in the oil flow path (88) from the battery heat exchanger (112).

3. The assembly of claim 2, further comprising a controller (80) comprising a processor (116) connected in signal communication with a non-transitory memory (118) storing instructions which, when executed by the processor (116), cause the processor (116) to:
receive a temperature of the battery (70);
compare the temperature to a threshold; and
control the flow regulator (108) to operate in the first mode or the second mode comprising controlling the flow regulator (108) to operate in the first mode in response to the temperature being less than the threshold and controlling the flow regulator (108) to operate in the second mode in response to the temperature being equal to or greater than the threshold.

4. The assembly of claim 2 or 3, wherein in the first mode the flow regulator (108) is configured to modulate a flow rate of the oil from the oil flow path (88) to the battery heat exchanger (112).

5. The assembly of any preceding claim, wherein:
the gas turbine engine (22) comprises a rotating structure (40, 42), and the rotating structure (40, 42) comprises a bladed compressor rotor (48, 54) and a bladed turbine rotor (50, 56); and
the assembly further comprises an electric machine (60, 64) coupled with the rotating structure (40, 42) and electrically connected with the battery (70),
wherein, optionally, the at least one engine oil load (86) comprises the electric machine (60, 64).

6. The assembly of any preceding claim, wherein the battery (70) comprises a plurality of lithium-ion battery cells or a plurality of nickel-metal hydride battery cells.

7. An assembly for an aircraft (1000), the assembly comprising:
a gas turbine engine (22) comprising a rotating structure (40, 42) and at least one engine oil load (86), the rotating structure (40, 42) comprising a bladed compressor rotor (48, 54) and a bladed turbine rotor (50, 56);
an electrical system (24) comprising an electric machine (60, 64) and a battery (70), the electric machine (60, 64) coupled with the rotating structure (40, 42), the electric machine (60, 64) electrically connected with the battery (70); and
a thermal management assembly (26) comprising an engine thermal management system, TMS, (74), a battery TMS (76), and at least one heat exchanger (112, 132), the engine TMS (74) forming an oil flow path (88) connected in fluid communication with the at least one engine oil load (86), the battery TMS (76) forming a battery coolant flow path (110) at the battery (70), the at least one heat exchanger (112, 132) configured to transfer heat energy from an oil within the oil flow path (88) to a coolant within the battery coolant flow path (110).

8. The assembly of claim 7, wherein the thermal management assembly (26) comprises an intermediate coolant fluid system (130), the at least one heat exchanger comprises an intermediate heat exchanger (132) and a battery heat exchanger (112), the intermediate heat exchanger (132) forms portions of the oil flow path (88) and the intermediate coolant fluid system (130), and the battery heat exchanger (112) forms portions of the intermediate coolant fluid system (130) and the battery coolant flow path (110).

9. The assembly of claim 7, wherein the at least one heat exchanger comprises a battery heat exchanger (112) connectable in fluid communication with the oil flow path (88), and the battery heat exchanger (112) forms a portion of the battery coolant flow path (110).

10. The assembly of claim 9, wherein the thermal management assembly (26) further comprises a flow regulator (108) selectively interconnecting the oil flow path (88) in fluid communication with the battery heat exchanger (112), the flow regulator (108) is operable in a first mode and a second mode, in the first mode the flow regulator (108) directs oil from the oil flow path (88) to the battery heat exchanger (112), and in the second mode the flow regulator (108) isolates oil from the oil flow path (88) to the battery heat exchanger (112).

11. The assembly of any of claims 7 to 10, wherein:
the at least one oil load (86) comprises the rotating structure (40, 42); and/or
the at least one oil load (86) comprises the electric machine (60, 64).

12. A system comprising:
an engine thermal management system, TMS, (74) forming an oil flow path (88) connected in fluid communication with at least one engine oil load (86);
a battery TMS (76) forming a battery coolant flow path (110), the battery TMS (76) comprising a battery heat exchanger (112) forming a portion of the battery coolant flow path (110);
a processor (116); and
a non-transitory memory (118) storing instructions which, when executed by the processor (116), cause the processor (116) to:
control a flow regulator (108) selectively interconnecting the oil flow path (88) and the battery heat exchanger (112) to operate in a first ECS mode or a second ECS mode to modulate a temperature of the battery (70).

13. The system of claim 12, wherein the instructions, when executed by the processor (116), further cause the processor (116) to:
receive a temperature of a battery (70); and
control the flow regulator (108) to operate in the first mode or the second mode based on the temperature.

14. The system of claim 13, wherein the instructions, when executed by the processor (116), further cause the processor (116) to compare the temperature to a threshold, wherein controlling the flow regulator (108) to operate in the first mode or the second mode based on the temperature includes controlling the flow regulator (108) to operate in the first mode in response to the temperature being less than the threshold and controlling the flow regulator (108) to operate in the second mode in response to the temperature being equal to or greater than the threshold.

15. The assembly or system of any preceding claim, wherein:
the engine TMS (74) further comprises at least one heat exchanger (94) further forming the oil flow path (88); and/or
the engine TMS (74) further comprises a pump (92) and an oil tank (90) further forming the oil flow path (88).
